# EUROPEAN PATENT SPECIFICATION

(11) **EP 0 597 987 B1**
(45) Date of publication and mention of the grant of the patent: **29.10.1997**
(21) Application number: 92917100.7
(22) Date of filing: 03.08.1992
(51) Int. Cl.: C09K 17/00, C05G 3/00, C05G 3/04

(54) **SOLUTION FOR WATERING PLANT ROOTS**
LÖSUNG ZUR BEWÄSSERUNG VON PFLANZENWURZELN
SOLUTION POUR L'IRRIGATION DES RACINES DE PLANTES

(30) Priority: 02.08.1991 US 739455
(43) Date of publication of application: 25.05.1994
(73) Proprietor: HANSEN, Ronald Peter, Frenchs Forest, N.S.W. 2086 (AU)
(72) Inventor: HANSEN, Ronald Peter, Frenchs Forest, N.S.W. 2086 (AU)
(74) Representative: Stebbing, Peter John Hunter
(86) International application number: PCT/AU92/00405
(87) International publication number: WO 93/03112

(56) References cited:
- EP-A- 0 475 684
- AU-A- 8 766 282
- CA-A- 1 235 917
- DE-A- 3 817 276
- DE-B- 1 225 437
- GB-A- 2 207 140
- US-A- 3 674 458
- US-A- 3 820 976
- US-A- 4 047 925
- US-A- 4 624 694
- DATABASE WPI Derwent Publications Ltd., London, GB; AN 91-316445 & SU-A-1 629 011 (BELO FORESTRY) 23 February 1991
- PATENT ABSTRACTS OF JAPAN vol. 14, no. 96 (C-0692)22 February 1990 & JP-A-01 305 004 (MEIJI SEIKA KEISHA)
- DERWENT ABSTRACT Accession no. 90-096544/13, Class P13; & JP,A,02 049 704 (TAIYO KAKAKU KOGYO) 20 February 1990 (20.02.90).
- DERWENT ABSTRACT Accession No. 91-130767/18, Class C01; & SU,A,1569336 (POLT AGRIC INST) 7 June 1990 (07.06.90).
- PATENTS ABSTRACTS OF JAPAN, C-302, page 119; & JP,A,60 084 385 (HISASHI MIYAMOTO) 13 May 1985 (13.05.85).
- DERWENT ABSTRACTS Accession No. 92-181469/22, Class C04; & SU,A,1668378 (PAVLODAR IND INST) 7 August 1991 (07.08.91).

## Description

This invention relates to an improved solution for use in the watering of roots, and more particularly to a water-soluble solution for application to grass and other root bearing plants. The solution of the present invention acts so that during humid weather, such as during humid evenings, moisture will be collected, while during hot and dry days the collected moisture will be released for feeding and watering the plant roots.

In conditions of water scarcity and/or high evaporation loss rates, for example due to high temperatures, low humidity, high winds and the like, soil loses water and moisture rapidly. Moisture in the soil is drawn to exposed soil surfaces by capillary action, thereby replacing the moisture loss by evaporation into the air. At the same time, moisture drawn from soil to plant root fibres by osmosis is transpired through plant stems and leaf systems and that fraction not converted by photosynthesis is then lost by evaporation from pores of leaf surfaces. It will be appreciated that soil can quickly become dehydrated to very low moisture content.

The survival of plants in such conditions thus depends on the amount of soil moisture that is accessible to the plant root systems. This is that fraction of the total soil moisture remaining after losses by way of the capillary/evaporative process. Since evaporative losses mean soils are driest near to the surface, plants with shallow root systems, such as for example grasses and other small species, are often effected more rapidly than deep rooted plants, such as trees and the like.

Where there is a marked change in ground temperatures between day and night, there is a significant air inhalation into porous soils during the night time cooling (contraction) cycle and an exhalation of air in moisture in the heat of the day. This has been found to aggravate the overall evaporative moisture loss.

The present invention sets out to provide a solution which, on application, reduces or minimises losses of moisture from direct evaporation, and which improves the proportion of soil moisture accessible to plants. The present invention also sets out to provide a solution which, in certain conditions, prevents, minimises or in some cases reverses the evaporative loss from day/night movement in and out of porous soils.

Commercially available chemical compositions, the literature and numerous published patent specifications disclose many compositions and methods for treating plant roots. By way of example, reference is made to United States patent specifications Nos 3,798,838 (Hashimoto); 4,063,919 (Grano); 4,380,886 (Koslow); 4,469,502 (Heller) and 4,540,427 (Helbling).

United States patent specification No 3,798,838 (Hashimoto) discloses the fertilisation and irrigation of highly permeable surface soils in semi-arid regions, wherein the soils are contacted with an aqueous solution of a water-soluble plant nutrient salt and an effective amount of a partially hydrolyzed polyacrylamide, to reduce the permeability of the soil without rendering it impermeable to water flow. It has been found that water soluble plant nutrients and such partially hydrolyzed polyacrylamides exhibit a synergistic effect to decrease water permeability of the soils. It has also been found that plants grow better in soil so treated and are more efficient in uptake of nutrients from the soil. These discoveries, as disclosed in US patent specification No 3,798,838 can be used to conserve water and fertiliser and improve the efficiency of economy by contact from the soil with a solution having a concentration of from 0.001 to about 1 % (by weight) of a polyacrylamide having from about 5 to about 80 % of its amide groups hydrolyzed to carboxylic acid groups and from 0.001 to 5 % (by weight) of a water soluble, plant nutrient salt.

United States patent specification No 4,063,919 relates to and discloses a fertiliser rod composition comprising about 100 parts of a polyvinyl alcohol, about 0 to 20 parts of a plasticizer and about 10 to 350 parts of a fertiliser, the specification also disclosing a process for producing such a rod and a product of such a process.

U.S. patent specification No 4,380,886 (Koslow) describes a method of promoting the transport of water through medium and coarse grained soils comprising the step of applying to the medium or coarse grained soil a soil amendment composition at a level of less than 20 parts per million parts by weight of dry soil, and preferably less than 5 ppm. The composition comprises a substantially linear, substantially water-soluble hydrophilic polymer having a molecular weight greater than 50,000. A preferred polymer is poly (ethylene oxide) having a molecular weight of 300,000 to 7,000,000.

U.S. patent specification No 4,469,502 (Heller) discloses a process for supplying plants with nutrients uniformly and over a long period of time by the addition of nutrient-charged synthetic resin ion exchangers and mineral fertilizers to the culture medium, according to which the nutrient-charged synthetic resin ion exchangers are employed together with those mineral fertilizers with particle size less than 500 µm which have been coated with massive polyurethanes having a particular water absorbing capacity which is adapted in a particular manner to the water solubility of the mineral fertilizer; furthermore, fertilizers containing nutrient-charged synthetic resin ion exchangers, and the mineral fertilizers coated with the massive polyurethanes having a particular water absorbing capacity.

U.S. patent specification No 4,540,427 (helbling) discloses a method for improving the water conservation properties of soil. The method increases the ability of the soil to absorb and retain water and acts to stabilize the loosening of break-up of the soil.
DE-A-1225437 describes the use of a humectant formed from a formaldehyde condensation product. In addition, the Merck Index discloses the use of sorbitol and other substances as humectants.
None of the prior art compositions or disclosures disclose or suggest a composition which meets the objects of and provides the advantages of the present invention.

It is an object of one aspect of the present invention to provide a solution for watering plant roots and the like which reduces or minimises evaporative moisture loss and which improves the amount of soil moisture accessible to plants.

Other objects of this invention will become apparent from the following description.

### Summary of the present invention

According to an aspect of this invention there is provided a liquid concentrate composition for improving plant root watering, comprising one or a plurality of humectants in aqueous solution, wherein at least one of said humectants is selected from a calcium, sodium or ammonia salt of lignosulfonic acid, which is also hygroscopic and acts as a binder. The lignosulfonate salt is preferably calcium lignosulfonate. Other binders may be included in the composition if required.

According to a further aspect of this invention there is provided a liquid concentrate composition for improving plant root watering, comprising from 25 to 75 parts (by volume) humectant; from 0.2 to 5 parts (by volume) binder and from 75 to 25 parts (by volume) water.

### Brief description of the accompanying drawings

The present invention will now be described by way of example only and with reference also the accompanying drawings, wherein:
- Fig. 1: is a sectional partial view of a plant in soil, illustrating (in diagrammatic form) a normal and improved cycle of moisture for watering such a plant, and
- Fig. 2: is a graph illustrating various characteristics of solutions prepared in accordance with the present invention.

### Detailed description of the preferred embodiments of the present invention

Many substances are effective and able to function as a humectant. A humectant has the particular property of tending to maintain a constant humidity in air which is in contact with a saturated solution of such humectant. At a given temperature, such a solution will emit moisture into air where the relative humidity is below the characteristic equilibrium point for that substance. Such a solution will also extract moisture from air at higher humidities. For the purposes of this invention, humectant is defined as a substance which absorbs moisture easily at certain humidity levels and reduces the rate of moisture transmission out of the treated substance.

Each humectant or mixture of substances containing a humectant has a characteristic humidity equilibrium point. By way of example only, at 20 degrees C, a substance (calcium chloride) which is commonly used as a dust-suppressant on dirt surfaces, has an equilibrium point of about 33 % relative humidity. The equilibrium point for zinc chloride solution is about 10 %. For sodium chloride (common salt) the equilibrium point is around 75 %.

It has been found that anything more than trace levels, most metallic salts, such as those discussed above, are inimical to plant life and thus cannot be considered as aids for reducing moisture loss from soils.

It has been found that certain organic substances, including some glycols and polyhydric alcohols (such as glycerol and sorbitol) have humectant effects and humidity equilibrium points. It has further been found that one or more humectants, in solution, will inhibit evaporation to and absorb moisture from air at relative humidities above their equilibrium points.

From various experiments, it has been found that the solution of the present invention, can be applied to soil surfaces or for example inserted into water reticulation/ irrigation systems. The humectant will act to absorb moisture during humid periods of time and the moisture so held by the humectant will then be extracted by the powerful osmosis action of root fibres during dry hot periods of time (such as during dry hot days).

Humectant formulations subject of the present invention are preferably prepared in the form of concentrated solutions which can then be diluted with water on site. Humectants which have surprisingly been found to have substantial advantages in improving plant root watering, include sorbitol, glycerol, molasses, potassium lactate, sodium lactate and potassium acetate. It should be known that sorbitol is a well known and readily available chemical (see for example Merck Index, 8th Edition, page 971).

Because certain binders have been found to act as humectants, it has therefore been found to be advantageous to combine or blend a humectant such as for example sorbitol with a humectant and binder such as calcium lignosulfonate. This blending or combination results in a synergistic effect enhancing the humectant properties of both the primary humectant (for example sorbitol) and the binder/humectant (for example calcium lignosulfonate).

Thus, while in the preferred form of the invention the solution includes one or more humectants in aqueous solution, the concentrate composition for improving plant root watering can include further additional components to enhance the properties of the composition and to improve its use.

In one form of the invention the binder can be in the form of Lignosite. Lignosite is a trade mark of Georgia Pacific Corporation of Houston, Texas, United States of America. Lignosite is a hygroscopic adhesive binder consisting essentially of a calcium or sodium or ammonia salt of lignosulfonic acid.

If desired, a thickening agent can also be added, such as for example a thickener known as Aqualon. Aqualon is a trade mark of Hercules Inc., of Wilmington, Delaware, United States of America. Aqualon is a cellulose ether adhesive thickener. Other thickener include hydroxy ethyl cellulose, carboxy methyl propyl cellulose, and the like.

These are by way of example only, but it should be appreciated that in certain cases such thickness may also have certain hygroscopic properties, to enhance the hygroscopic properties of the resultant concentrate composition.

It should further be appreciated that in certain forms of the invention it may be advantageous to use a wetting agent, such as for example a wetting agent known as Triton 101. Triton 101 is a trade mark of the Rohm and Itaas Corporation of Philadelphia, Pennsylvania, United States of America. Triton 101 is a preferred chemical wetting agent or surfactant, and is a non-ionic surfactant compatible with humectants and other components of the solution described herein. Other wetting agents include by way of example only Triton X100, Ninol II-CN, Igepal 60630, nonyl phenol ethoxylate 9-15 mole.

In preferred forms of the invention the concentrated solution is utilised in parts (by volume) based on a total composition which includes (by way of example) :

| | |
|---|---|
| Humectant | 25 to 75 parts (by volume) |
| Thickener | from 0.2 to 1.5 parts (by volume) |
| Humectant/Binder | from 0.2 to 5 parts (by volume) |
| Wetting agent | from 0.2 to 2.0 parts (by volume) |
| Water | from 75 to 25 parts (by volume) |

A more specific preferred range may include:

| | |
|---|---|
| Humectant | 30 to 60 parts (by volume) |
| Humectant/Binder | 0.2 to 5.0 parts (by volume) |
| Thickener | 0.2 to 0.5 parts (by volume) |
| Wetting agent | 0.2 to 2.0 parts (by volume) |
| Water | 60 to 30 parts (by volume) |

In a form of the invention, in order to result in a 200 l container of the composition according to the present invention, 90 l of water was mixed with 135 kgm of sorbitol liquid and 2 kgm of binder in the form of calcium lignosulfonate powder which was mixed into the solution. This solution was topped up with water to a total of 200 l to enable packaging into ten 20 l pails for use. The combination of the sorbitol and calcium lignosulfonate have a synergistic effect which enhances the hygroscopic properties of both, so that the calcium lignosulfonate, as well as acting as a binder to assist in holding the composition against plant roots and the like, also enhances the hygroscopic action of the composition.

Further examples are as follows:

### Example I

| | Material | Parts by Volume |
|---|---|---|
| (1) | Humectant, Sorbo Solution (Sorbitol) | 44.35 |
| (2) | Thickener, Aqualon CMC-7LT (Cellulose ether adhesive binder) | 0.36 |
| (3) | Binder, Lignosite CX (Calcium lignosulfonate) | 1.34 |
| (4) | Wetting Agent, Triton N-101 (non-ionic surfactant) | 0.60 |
| (5) | Water | 53.38 |

Item 1 functions as a humectant. Items 2 and 3 are the thickener and the binder which have a secondary function in addition to enhancing the overall humectant action of the compound. The thickening and adhesive nature of these assists the anchoring of microthin coatings of the diluted compound to soil particles and plant root systems, reducing losses by migratory leaching during evaporation-induced capillary action. Item 4, the wetting agent, plays little or no part in the moisture-control function of the system. It aids wetting and penetration of soils which contain hydrophobic ingredients. For certain applications, the wetting agent may be totally eliminated. The water makes the composition a liquid in concentrated form for being mixed with additional water on site for application.

These concentrates can then be formulated readily into aqueous solutions. The concentrate can be diluted with from about between 2 to 20 parts of water. The higher concentrations such as 2 to 1 are for plants with larger root structures such as trees. The lower concentrations such as 20 to 1 are for plants with smaller root structures such as grasses. The formulations ranges of the concentrated solutions are proportioned to the amount of water to dilute it.

The compound is best applied to soil surfaces, not directly to plant leaf systems. It may also be inserted into water reticulation/irrigation systems, by proportioning devices so as to be diluted to similar concentrations in sprinkler sprays or trickle feed systems. If in sprinklers, it is effective to stop the feed of compound prior to terminating a particular watering, in sufficient time for accumulated compound on plant leaves to be washed off into the soil where it is required.

Watering is preferably at rates between about 4 and 100 ml of the diluted solution per square metre. The higher rates are for plants with larger root structures such as trees. The lower rates are for grasses and other plants with smaller root structures such as grasses.

In soils treated with the improved solutions of the present invention, the amount of the compound is only a very small fraction of the mass of soil being tapped by the root systems of the plants. It has been found that the principal benefit to the plant is provided by the minute quantity of compound remaining in close contact with the hair fibers at the extremities of roots.

For example, in tests, thirty tomato seedlings 8 cm high were removed from their germination soil and had their roots washed clean before being re-planted in original soil with a measured moisture content of 18 % by weight. Twenty were washed in water only and ten in a 10 % dilution of the above formulation. Of the twenty water-washed seedlings, half were immediately re-planted in soil surface-watered with a similar 10 % dilution of the invention. All other seedlings were watered with a similar quantity of water only. All were then left with no further watering for ten days.

Of the 10 with roots washed in the invention fluid, 8 survived. Of the 10 washed in water only, in plain soil, only 2 survived. Of the 10 likewise water-washed, but with the invention fluid added to the soil via initial surface-watering, 6 survived.

Similar experiments with other plant varieties gave generally similar results, with survival rates of plants being generally enhanced by 50 to 100 % compared with similar plants in untreated soils.

It is evident that the fluid accumulated on root hairs is one of the factors in enhanced plant survival. Experiments with selectively-soluble tracer dyes indicate little if any of the compound is actually absorbed into the plant structure but remains around the root hairs or in the soil adjacent thereto.

The main function of the compound relates to its aforesaid property of maintaining constant humidity of air in contact with it. Thus, a micro-thin film of the compound around soil particles and root fibers will have its dissolved moisture extracted by the powerful osmosis action of root fibers, effectively increasing the concentration of the compound vis-a-vis its remaining water. During the stated inhalation of air into the soil during a cooling phase, moisture will tend to be absorbed from the air by the compound, replacing that extracted by the plant system.

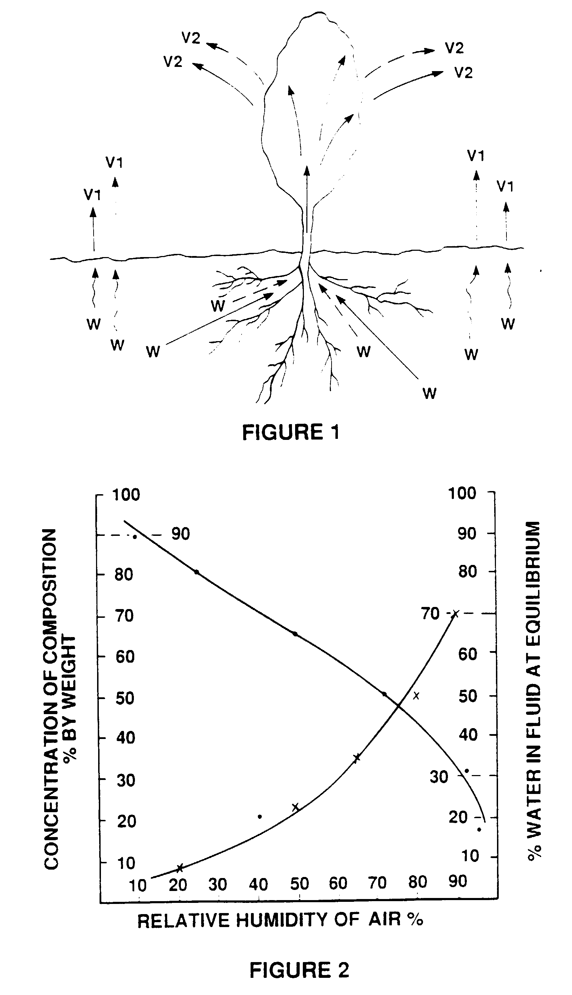

Figure 1 shows in sectional view a plant in soil illustrating in dotted lines a normal cycle of moisture for watering such plant. In solid lines is an improved cycle of moisture for watering such plant.

Figure 2 illustrates this effect at various humidities and concentrations of the humectant fluid with the negative curve, and also shows with the positive curve the hygroscopicity of the compound at different relative humidities.

For practical applications, the humectant may be a combination of humectants.

### Example II

| | Material | Parts per Volume |
|---|---|---|
| 1A. | Potassium lactate | 25 |
| 1B. | Sorbitol | 10 |
| 2. | Sodium carboxymethyl cellulose | 1.0 |
| 3. | Calcium lignosulfonate | 1.5 |
| 4. | Soya-amine ethoxylate | 0.007 |
| 5. | Water | 53 |

Low percentages of humectant are used in extremely high humidity areas.

The following are further examples:

### Example III

| | Material | Parts by Volume |
|---|---|---|
| (1) | Molasses | 50.0 |
| (1a) | Other Humectant, Potassium Lactate | 20.0 |
| (2) | Thickener, Hydroxy Ethyl Cellulose | 0.2 |
| (3) | Binder, Lignosite | 30.0 |
| (4) | Wetting Agent, Triton 101 | 0.0 |
| (5) | Water | 9.8 |

Solutions without wetting agents include sandy, porous soils which are easily penetrated.

## Claims

1. A liquid concentrate composition for improving plant root watering, comprising a plurality of organic humectants in aqueous solution, characterised in that at least one said humectants is selected from calcium, sodium, or ammonia salt of lignosulfonic acid, which is hygroscopic and acts as a binder.

2. A liquid concentrate composition for improving plant root watering as claimed in claim 1 wherein the lignosulfonate salt is calcium lignosulfonate.

3. A liquid concentrate composition for improving plant root watering as claimed in either of claims 1 or 2 including an additional binder.

4. A liquid concentrate composition for improving plant root watering as claimed in claim 1 wherein the organic humectant other than the lignosulfonate salt is selected from sorbitol, glycerol, molasses, potassium lactate, sodium lactate and potassium acetate.

5. A liquid concentrate composition as claimed in claim 4, wherein one humectant is potassium lactate.

6. A liquid concentrate composition for improving plant root watering, as claimed in claims 1 or 2, comprising 25 to 75 parts (by volume) organic humectant and 75 to 25 parts (by volume) water.

7. A liquid concentrate composition for improving plant root watering, as claimed in claims 1 or 2, comprising of from 25 to 75 parts (by volume) organic humectant; from 0.2 to 5 parts (by volume) binder and from 75 to 25 parts (by volume) water.

8. A liquid concentrate composition for improving plant root watering, as claimed in claims 1 or 2, comprising an organic humectant, a thickener, a binder and a wetting agent, in which the parts by volume based on the total composition are:
| | |
|---|---|
| Humectant | from 25 to 75 |
| Thickener | from 0.2 to 1.5 |
| Binder | from 0.2 to 5 |
| Wetting Agent | from 0.2 to 2.0 |
| Water | from 75 to 25 |

9. The composition of claim 8, to which the parts by volume based on the total composition are:-
| | Material | Parts by Volume |
|---|---|---|
| (1) | Humectant, Sorbo Solution (Sorbitol) | 44.35 |
| (2) | Thickener (Cellulose ether adhesive thickener) | 0.36 |
| (3) | Humectant/Binder, (Calcium lignosulfonate) | 1.34 |
| (4) | Wetting Agent, (non-ionic surfactant) | 0.60 |
| (5) | Water | 53.38 |

10. The composition of claim 8, to which the parts by volume based on the total composition are:-
| | Material | Parts by Volume |
|---|---|---|
| 1A | Potassium lactate | 25 |
| 1B | Sorbitol | 10 |
| 2 | Sodium carboxymethyl cellulose | 1.0 |
| 3 | Calcium lignosulfonate | 1.5 |
| 4 | Soya-amine ethoxylate | 0.007 |
| 5 | Water | 53 |

11. The composition of claim 8, to which the parts by volume based on the total composition are:-
| | Material | Parts by Volume |
|---|---|---|
| (1) | Molasses | 50.0 |
| (1A) | Other Humectant, Potassium Lactate | 20.0 |
| (2) | Thickener, Hydroxy Ethyl Cellulose | 0.02 |
| (3) | Binder, calcium lignosulfonate | 30.0 |
| (4) | Wetting Agent, nonionic sulfactant | 0.0 |
| (5) | Water | 9.8 |

12. A method for improving watering of plant roots which comprises introducing a composition as claimed in any one of the preceding claims to the main root areas of the plant root.

## Patentansprüche

1. Flüssige Konzentratzusammensetzung zur Verbesserung der Bewässerung von Pflanzenwurzeln, welche eine Mehrzahl von organischen Feuchthaltemitteln in wäßriger Lösung aufweist, **dadurch gekennzeichnet**, daß wenigstens eines der Feuchthaltemittel aus der Gruppe gewählt ist, welche Kalzium-, Natrium- oder Ammoniaksalz von Ligninsulfonsäure umfaßt, welches hygroskopisch ist und als ein Bindemittel wirkt.

2. Flüssige Konzentratzusammensetzung zur Verbesserung der Bewässerung von Pflanzenwurzeln nach Anspruch 1, bei der das Ligninsulfonatsalz Kalziumligninsulfonat ist.

3. Flüssige Konzentratzusammensetzung zur Verbesserung der Bewässerung von Pflanzenwurzeln nach Anspruch 1 oder 2, welche ein zusätzliches Bindemittel umfaßt.

4. Flüssige Konzentratzusammensetzung zur Verbesserung der Bewässerung von Pflanzenwurzeln nach Anspruch 1, bei der das organische Feuchthaltemittel außer dem Ligninsulfonatsalz aus der Gruppe gewählt ist, welche Sorbitol, Glyzerin, Molasse, Kaliumlactat, Natriumlactat und Kaliumacetat umfaßt.

5. Flüssige Konzentratzusammensetzung nach Anspruch 4, bei der ein Feuchthaltemittel Kaliumlactat ist.

6. Flüssige Konzentratzusammensetzung zur Verbesserung der Bewässerung von Pflanzenwurzeln nach Anspruch 1 oder 2, welche 25 bis 75 Volumenteile eines organischen Feuchthaltemitttels und 75 bis 25 Volumenteile Wasser aufweist.

7. Flüssige Konzentratzusammensetzung zur Verbesserung der Bewässerung von Pflanzenwurzeln nach Anspruch 1 oder 2, welche 25 bis 75 Volumenteile an organischem Feuchthaltemittel; 0,2 bis 5 Volumenteile Bindemittel und 75 bis 25 Volumenteile Wasser aufweist.

8. Flüssige Konzentratzusammensetzung zur Verbesserung der Bewässerung von Pflanzenwurzeln nach Anspruch 1 oder 2, welche ein organisches Feuchthaltemittel, ein Verdickungsmittel, ein Bindemittel und ein Benetzungsmittel aufweist, wobei die Volumenteile basierend auf der Gesamtzusammensetzung folgendes ausmachen:
| | |
|---|---|
| Feuchthaltemittel | von 25 bis 75 |
| Verdickungsmittel | von 0,2 bis 1,5 |
| Bindemittel | von 0,2 bis 5 |
| Benetzungsmittel | von 0,2 bis 2,0 |
| Wasser | von 75 bis 25 |

9. Zusammensetzung nach Anspruch 8, bei der die Volumenteile basierend auf der Gesamtzusammensetzung folgendes ausmachen:
| | Material | Volumenteile |
|---|---|---|
| (1) | Feuchthaltemittel, Sorbolösung (Sorbitol) | 44,35 |
| (2) | Verdickungsmittel (Zelluloseetherhaftmittelverdickungsmittel) | 0,36 |
| (3) | Feuchthaltemittel/Bindemittel (Kaliziumlignisulfonat) | 1,34 |
| (4) | Benetzungsmittel (nichtionisches Tensid) | 0,60 |
| (5) | Wasser | 53,38 |

10. Zusammensetzung nach Anspruch 8, bei der die Volumenteile basierend auf der Gesamtzusammensetzung folgendes ausmachen:
| | Material | Volumenteile |
|---|---|---|
| 1A | Kaliumlactat | 25 |
| 1B | Sorbitol | 10 |
| 2 | Natriumcarboxymethylzellulose | 1,0 |
| 3 | Kalziumligninsulfonat | 1,5 |
| 4 | Sojaaminethoxylat | 0,007 |
| 5 | Wasser | 53 |

11. Zusammensetzung nach Anspruch 8, bei der die Volumenteile basierend auf der Gesamtzusammensetzung folgendes ausmachen:
| | Material | Volumenteile |
|---|---|---|
| (1) | Molasse | 50,0 |
| (1A) | Weitere Feuchthaltemittel, Kaliumlactat | 20,0 |
| (2) | Verdickungsmittel, Hydroxyethylzellulose | 0,02 |
| (3) | Bindemittel, Kalziumligninsulfonat | 30,0 |
| (4) | Benetzungsmittel, nichtionisches Tensid | 0,0 |
| (5) | Wasser | 9,8 |

12. Verfahren zum Verbessern der Bewässerung von Pflanzenwurzeln, welches aufweist, daß eine Zusammensetzung nach einem der vorangehenden Ansprüche den Hauptwurzelbereichen der Pflanzenwurzel zugeleitet wird.

## Revendications

1. Composition concentrée liquide pour améliorer l'irrigation des racines des plantes, comprenant plusieurs humectants organiques en solution aqueuse, caractérisée par le fait qu'au moins l'un desdits humectants est choisi parmi les sels de calcium, de sodium ou d'ammonium de l'acide lignosulfonique, qui sont hygroscopiques et exercent la fonction de liant.

2. Composition concentrée liquide pour améliorer l'irrigation des racines des plantes, selon la revendication 1, dans laquelle le sel lignosulfonate est le lignosulfonate de calcium.

3. Composition concentrée liquide pour améliorer l'irrigation des racines des plantes, selon l'une des revendications 1 ou 2, comprenant un liant supplémentaire.

4. Composition concentrée liquide pour améliorer l'irrigation des racines des plantes, selon la revendication 1, dans laquelle l'humectant organique autre que le sel lignosulfonate est choisi parmi le sorbitol, le glycérol, la mélasse, le lactate de potassium, le lactate de sodium et l'acétate de potassium.

5. Composition concentrée liquide selon la revendication 4, dans laquelle l'un des humectants est le lactate de potassium.

6. Composition concentrée liquide pour améliorer l'irrigation des racines des plantes, selon l'une des revendications 1 ou 2, comprenant 25 à 75 parties (en volume) d'humectant organique et 75 à 25 parties (en volume) d'eau.

7. Composition concentrée liquide pour améliorer l'irrigation des racines des plantes, selon l'une des revendications 1 ou 2, comprenant de 25 à 75 parties (en volume) d'humectant organique ; de 0,2 à 5 parties (en volume) de liant et de 75 à 25 parties (en volume) d'eau.

8. Composition concentrée liquide pour améliorer l'irrigation des racines des plantes, selon l'une des revendications 1 ou 2, comprenant un humectant organique, un épaississant, un liant et un agent mouillant, dans laquelle les parties en volume sur la base de la composition totale sont :
| | |
|---|---|
| Humectant | de 25 à 75 |
| Epaississant | de 0,2 à 1,5 |
| Liant | de 0,2 à 5 |
| Agent mouillant | de 0,2 à 2,0 |
| Eau | de 75 à 25. |

9. Composition selon la revendication 8, dans laquelle les parties en volume sur la base de la composition totale sont :
| | Matière | Parties en volume |
|---|---|---|
| (1) | Humectant, Solution Sorbo (Sorbitol) | 44,35 |
| (2) | Epaississant (épaississant adhésif Ether de cellulose) | 0,36 |
| (3) | Humectant/Liant (Lignosulfonate de Calcium) | 1,34 |
| (4) | Agent Mouillant (agent tensio-actif non-ionique) | 0,60 |
| (5) | Eau | 53,38 |

10. Composition selon la revendication 8, dans laquelle les parties en volume sur la base de la composition totale sont :
| | Matière | Parties en volume |
|---|---|---|
| 1A | Lactate de potassium | 25 |
| 1B | Sorbitol | 10 |
| 2 | Carboxyméthyl cellulose sodique | 1,0 |
| 3 | Lignosulfonate de calcium | 1,5 |
| 4 | Ethoxylate d'amine de soja | 0,007 |
| 5 | Eau | 53 |

11. Composition selon la revendication 8, dans laquelle les parties en volume sur la base de la composition totale sont :
| | Matière | Parties en volume |
|---|---|---|
| (1) | Mélasse | 50,0 |
| (1B) | Autre Humectant, Lactate de Potassium | 20,0 |
| (2) | Epaississant, Hydroxy Ethyl Cellulose | 0,02 |
| (3) | Liant, lignosulfonate de calcium | 30,0 |
| (4) | Agent Mouillant, agent tensio-actif non-ionique | 0,0 |
| (5) | Eau | 9,8 |

12. Procédé pour améliorer l'irrigation des racines des plantes, qui comprend l'introduction d'une composition telle que définie à l'une quelconque des revendications précédentes dans les régions principales des racines des plantes.
